# EUROPÄISCHE PATENTSCHRIFT

(11) **EP 4 308 383 B1**
(45) Veröffentlichungstag und Bekanntmachung des Hinweises auf die Patenterteilung: **11.02.2026**
(21) Anmeldenummer: 22716370.6
(22) Anmeldetag: 17.03.2022
(51) Int. Cl.: B33Y 40/10, B29C 64/118, B22F 10/00, B22F 12/00, B29C 48/02, B29C 48/05, B29C 48/25, B29C 48/285, B29C 48/475, B29C 48/92, B29C 64/209, B29C 64/314, B29C 64/329, B29C 64/393, B33Y 10/00, B33Y 30/00, B33Y 50/02, B29C 64/295

(54) **VERFAHREN ZUM BEREITSTELLEN DRUCKFÄHIGER SCHMELZE ZUM BETREIBEN EINES DRUCKKOPFES FÜR EINEN 3D-DRUCKER**
METHOD FOR PROVIDING A PRINTABLE MELT IN ORDER TO OPERATE A PRINTHEAD FOR A 3D PRINTER
PROCÉDÉ DE FOURNITURE DE MATIÈRE FONDUE IMPRIMABLE POUR FAIRE FONCTIONNER UNE TÊTE D'IMPRESSION POUR IMPRIMANTE 3D

(30) Priorität: 18.03.2021 DE 102021202649
(43) Veröffentlichungstag der Anmeldung: 24.01.2024
(73) Patentinhaber: Robert Bosch GmbH, 70442 Stuttgart (DE)
(72) Erfinder: JAHNLE, Hendrik, 71397 Leutenbach (DE)
(86) Internationale Anmeldenummer: PCT/EP2022/057035
(87) Internationale Veröffentlichungsnummer: WO 2022/195031

(56) Entgegenhaltungen:
- EP-A1- 3 117 982
- EP-A1- 3 326 790
- DE-A1- 102017 205 673

## Beschreibung

Die vorliegende Erfindung betrifft ein Verfahren zum Bereitstellen druckfähiger Schmelze zum Betreiben eines Druckkopfes für einen 3D-Drucker.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material ausgebracht werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Am verbreitetsten ist das "fused deposition modeling" (FDM), bei dem ein Filament aus dem Ausgangsmaterial in einer elektrisch beheizten Extruderdüse aufgeschmolzen und schichtweise auf eine Plattform aufgebracht wird. In Form eines derartigen Filaments ist das Ausgangsmaterial sehr teuer.

In der US 2016/082 627 A1 wird vorgeschlagen, das Ausgangsmaterial in Granulatform zuzuführen und mit einer Förderschnecke zu einer beheizten Zone zu fördern, aus der es in plastifizierter Form austritt. Zum einen ist Granulat deutlich günstiger, und zum anderen können Mischungen aus verschiedenen thermoplastischen Materialien auf diese Weise einfach hergestellt werden.

Ferner ist aus der DE 102016222306 A1 ein Druckkopf bekannt, wobei in diesem ein Granulat über einen Kolben und eine beheizte Strecke plastifiziert wird. Wenn der Kolben auf das Granulat drückt, wird dieses verdichtet und zu einer Plastifizierungszone im unteren Bereich des Druckkopfes gefördert. Dabei treten Kräfte auf, die den Kolben und eine Zylinderwandung des Druckkopfes stark beanspruchen und zu erhöhtem Verschleiß an der Zylinderwand des Druckkopfgehäuses führen können. Ferner ist eine komplexe Aufschmelzgeometrie mit einer Wärmeleitstruktur offenbart, wobei diese eine Heizleistung eines Heizelements in das plastifizierte Material einbringt, um es in eine flüssige Phase des Materials zu bringen.

Die EP 3 326 790 A1 offenbart eine Fertigungsvorrichtung für ein dreidimensionales Objekt, einschließlich einer Materialzuführeinheit, die ein Düsenteil aufweist, das so konfiguriert ist, dass es ein formgebendes Material zur Formung des dreidimensionalen Objekts ausstößt, wobei die Fertigungsvorrichtung ein Zuführteil aufweist, das Formmaterial in das Düsenteil zuführt.

Die EP 3 117 982 A1 offenbart ein dreidimensionales Drucksystem, umfassend einen Druckkopf, der vertikal über einer Bauplattform angeordnet ist, wobei der Druckkopf eine Düse mit variabler Breite und einer rechteckigen Öffnung aufweist, ein Mittel zum Bewegen des Druckkopfes und ein Mittel zum Extrudieren von Granulaten durch die Düse mit variabler Breite, um ein geschmolzenes Farbband vertikal über der Bauplattform bereitzustellen.

Die DE 10 2017 205673 A1 offenbart eine Extrusionseinheit für eine Vorrichtung zur Extrusion von thermoplastischen Kunststoffen, wobei die Extrusionseinheit als separates, mit einer Dosiereinheit der Vorrichtung verbindbares Bauteil ausgebildet ist und ein Heißkanalsystem mit einem Einlass und einem Auslass umfasst, wobei der Einlass mit einem Auslass der Dosiereinheit verbindbar ist.

Der Erfindung liegt die Aufgabe zugrunde, ein Verfahren zum Bereitstellen druckfähiger Schmelze zum Betreiben eines Druckkopfes für einen 3D-Drucker und einen Druckkopf für einen 3D-Drucker bereitzustellen, wobei das Verfahren und der Druckkopf hochwertige Schmelze in reproduzierbare Qualität bereitstellen.

### Offenbarung der Erfindung

Im Rahmen der Erfindung wurde ein Verfahren zum Bereitstellen druckfähiger Schmelze zum Betreiben eines Druckkopfes für einen 3D-Drucker entwickelt.

Das Verfahren umfasst folgende Schritte:
- Umwandeln des Materials von einer festen Phase über eine plastische Phase in eine flüssige Phase und
- Verdichten des Materials.

Das Verfahren umfasst ferner Prozesse, die Teil eines Prozessablaufs vom Befüllen bis zum Öffnen einer Düse des Druckkopfes während der Druckvorbereitung sind. Dieser druckvorbereitende Prozess wird auch Refillprozess genannt, da es sich um einen wiederkehrenden Ablauf handelt, der während des Druckens eines Bauteils beliebig wiederholt wird. Der Refillprozess ist das Verfahren zum Bereitstellen druckfähiger Schmelze zum Betreiben des Druckkopfes für einen 3D-Drucker.

Der Druckkopf zur Durchführung des Verfahrens umfasst eine in einem Gehäuse des Druckkopfes angeordnete Aktorvorrichtung zur Ansteuerung des Kolbens, einen Düsenkopf mit ein oder mehreren Heizelementen zur Umwandlung des Materials von einer festen Phase über eine plastische Phase in eine flüssige Phase und die Düse zur Ausbringung der flüssigen Phase des Materials aus dem Düsenkopf, wobei erfindungsgemäß die Düse zumindest teilweise während des Verdichtens des Materials verschlossen ist.

Die Aktorvorrichtung zur Ansteuerung des Kolbens kann ein Elektromotor, beispielsweise mit einer mechanischen Übersetzung oder ein hydraulischer Antrieb mit einer hydraulischen Druckquelle sein.

Ein Elektromotor als Aktorvorrichtung hat gegenüber einem hydraulischen Antrieb ein geringeres Gewicht und sorgt dadurch in vorteilhafter Weise für eine hohe Dynamik des gesamten Druckers und des Druckprozesses, da weniger Masse beschleunigt werden muss.

Ein hydraulischer Antrieb erreicht in vorteilhafter Weise hohe Kräfte beim Ansteuern des Kolbens.

Die Erfindung umfasst das Verdichten des Materials während des Verdichtungsprozesses, umfassend folgende Schritte:
- Vorverdichten des Materials durch Vorschub des Kolbens,
- Verschließen der Düse des Druckkopfes,
- Verdichten des Materials durch Vorschub des Kolbens und
- Halten des Kolbens in einer Halteposition.

Erfindungsgemäß_wird das Vorverdichten des Materials durch Vorschub des Kolbens druck- und/oder kraftgesteuert durchgeführt, wobei bis zu einer Position vorverdichtet wird, die erreicht ist, wenn eine materialabhängige Steigung und/oder ein materialabhängiger Steigungswinkel einer Kraft- und/oder Druckkurve erreicht und/oder überschritten wird.

Das Vorverdichten wird durch kraft-, bzw. druckgesteuertes Ansteuern des Kolbens durch die Aktorvorrichtung ausgeführt, wobei sich die Zielposition des Kolbenbodens im ersten Drittel der Plastifizierungszone, ausgehend von der kalten Zone, befindet. Das Granulat wird in der Plastifizierungszone durch den Vorschub des Kolbens komprimiert, wobei sich gleichzeitig in der Schmelzezone zwischen dem Hohlraum und der Düse Schmelze befindet. Das plastifizierte Granulat wird dadurch in der Mischzone in die Schmelze hineingedrückt.

Durch das Absenken des Kolbens und analog der Kolbennadel in Richtung Düse tritt bereits Schmelze aus der Düse aus, wodurch in vorteilhafter Weise erreicht wird, dass möglicherweise noch vorhandene Luft, bzw. Lufteinschlüsse aus dem Düsenkopf verdrängt werden. Dadurch wird die Düse frei.

Nach Erreichen der Zielposition des Vorverdichtens wird die Düse des Druckkopfes verschlossen.

Die Düse kann beispielsweise durch ein Verschlussventil verschlossen werden, oder in vorteilhafter Weise durch das Positionieren des Druckkopfes auf eine Platte im Bauraum des Druckers. Ferner kann auch ein bereits gedruckter Bereich eines Bauteils angefahren werden und die Düse dadurch verschlossen werden

In einem nächsten Verfahrensschritt wird das Verdichten des Materials durch Vorschub des Kolbens bei verschlossener Düse druckgesteuert durchgeführt und dabei eine Halteposition angefahren, bis ein Peakdruck erreicht wird.

In einer Weiterbildung wird der Kolben in der Halteposition gehalten, wobei während des Haltevorgangs der Druck und die Temperatur der flüssigen Phase gemessen werden und die Messwerte durch die Auswerteeinheit zur Funktionskontrolle des Verdichtungsprozesses überprüft werden.

Ferner ist die Düse während des Haltens des Kolbens in der Halteposition weiterhin verschlossen.

Zum Verdichten des Materials wird der Kolben durch die Aktorvorrichtung druckgesteuert vorgeschoben bis ein definierter Peakdruck und damit eine Peakdruckposition erreicht wird. Dabei ist die Düse verschlossen. Die Kolbennadel kann dabei derart in den Schmelzeraum eingetaucht sein, dass dadurch ein Teil der flüssigen Phase aus dem oberen Bereich des Schmelzeraums durch die Öffnungen des Nierenstücks aus der Schmelzezone zurück in die Mischzone verdrängt wird, wodurch sich der Teil der flüssigen Phase mit der plastischen Phase aus der Plastifizierungszone in der Mischzone vermischt.

Anschließend wird die sogenannte Peakdruckposition für einen materialabhängigen vordefinierten Zeitraum gehalten, daher ist die Peakdruckposition auch die Halteposition des Druckkopfes.

Während des Haltens des Kolbens in der Halteposition ist die Düse verschlossen.

Durch den Haltevorgang wird Restluft verdrängt und Schmelze wird in der Mischzone C homogenisiert. Dadurch wird in vorteilhafter Weise ein besserer Energiefluss erreicht und ein homogeneres Material erzeugt.

Der hier beschriebene Haltevorgang dient zudem in vorteilhafter Weise zur Analyse und zu einem Systemcheck des Druckkopfes, da sich folgende Effekte bei der Druckmessung des Drucks ergeben können. Ein Druckanstieg des Drucks in der Schmelze würde bedeuten, dass die Schmelze ausgast, weil beispielsweise die Temperatur der Schmelze zu hoch ist. Zu hohe Schmelzetemperaturen sind nicht gewünscht, da Luftplasma entstehen kann, was zu einem chemischen Zerfall führen würde.

Ein starker Druckabfall des Schmelzedrucks könnte beispielsweise bedeuten, dass das System des Druckkopfs undicht ist oder noch zu viel Luft im System war. Dieser Effekt könnte auftreten, wenn beispielsweise zu viel kaltes Material im Hohlraum vorhanden war, weil das Temperaturmanagement des Druckkopfes nicht optimal eingestellt war.

Das erfindungsgemäße Verfahren kann in vorteilhafter Weise zur Ermittlung einer Federkonstante der flüssigen Phase führen, wobei das Ermitteln einer Federkonstante der flüssigen Phase folgende Schritte umfassen kann:
- druckgesteuertes Zurückfahren von der Halteposition nach Beendigung des Haltens auf eine Zielposition, die erreicht wird, wenn der Schmelzedruck einen Zieldruck erreicht,
- Ermitteln des Druckunterschieds zwischen dem Peakdruck und dem Zieldruck,
- Ermitteln der Strecke zwischen der Halteposition und der Zielposition und
- Berechnung der Federkonstante der flüssigen Phase.

Die Federkonstante ergibt sich aus der Kompressibilität der Schmelze und führt zu einem Korrekturfaktor, bzw. Formfaktor, der zur exakten Ansteuerung des Kolbens durch die Aktorvorrichtung benötigt wird.

Aufgrund der Kompressibilität der Schmelze entsprechen beispielsweise 1,2 Volumeneinheiten eines geometrischen, durch den Kolben zurückgelegten Kolbenwegs, 1,0 Volumeneinheiten eines ausgetragenen Volumens der Schmelze. Ohne Kompressibilität wäre das Verhältnis 1:1.

Durch die Ermittlung der Federkonstante der Schmelze kann erreicht werden, dass die Aktorvorrichtung den Kolben geregelt ansteuern kann, wobei die Federkonstante es unter anderem ermöglicht, dass der reale Austrag der Schmelze den korrekten, berechneten Volumenstrom der Schmelze in Abhängigkeit einer Bahngeschwindigkeit des bewegten Druckkopfes beim Drucken erreicht. Das heißt, dass an jeder Druckposition bei jeder Bahngeschwindigkeit des Druckkopfes die jeweils benötigte Menge Schmelze auf das Bauteil ausgebracht wird.

In einer Weiterbildung umfasst die Druckvorbereitung der flüssigen Phase folgende Schritte:
- aktives Dekomprimieren der flüssigen Phase durch Zurückziehen des Kolbens in Abhängigkeit der Federkonstante und
- Öffnen der Düse.

Beim aktiven Dekomprimieren wird der Kolben in Abhängigkeit der ermittelten Federkonstante um ca. 1 bis 2 Millimeter zurückgezogen, wodurch in vorteilhafter Weise erreicht wird, dass keine Schmelze aus der Düse, bzw. Düsenöffnung austritt, wenn diese dabei geöffnet wird. Dies wäre bei einem weiteren Halten der Position aufgrund des vorhandenen offenen Systems durch den Einfluss der Schwerkraft der Fall. Gleichzeitig wird die Schmelze analog einer Feder entlastet.

Anschließend beginnt der Druckprozess mit der weiteren Druckvorbereitung durch Kompression.

Das Gesamtsystem des Druckkopfes ist ein kompressibles System, da die Schmelze beispielsweise eine Kompression von ca. 20% aufweisen kann. Daher entspricht das durch den Vorschub des Kolbens verdrängte Volumen nicht dem Volumen des ausgetragenen Materials, wodurch sich ungenaue und unregelmäßige Austräge ergeben können.

Die Ausbringung der flüssigen Phase, das heißt das Drucken, wird druckgeregelt durchgeführt, wobei:
- der Druck im Schmelzeraum permanent gemessen wird,
- der Kolben aktiv über die Steuer- und Regeleinheit angesteuert wird, wobei der Vorschub des Kolbens druckabhängig um einen Korrekturfaktor angepasst wird, wobei sich der Korrekturfaktor aus der berechneten Federkonstante der flüssigen Phase des Materials ergibt.

Der gemessene Druck entspricht dem Druck, der durch Austrag der flüssigen Phase auf das Bauteil entsteht und der Korrekturfaktor ist von Vorteil, um die Kompressibilität der flüssigen Phase auszugleichen.

Die Kompression der Schmelze im Schmelzeraum zu Druckbeginn wird zu einem Teil über Reibung an der Düsenöffnung der Düse beim "Herauspressen" der Schmelze erzeugt und zu einem Teil über den Widerstand beim Drucken auf das Bauteil oder einen Substratträger, auf dem das Bauteil aufgebaut wird.

Ein gleichmäßiger Austrag der Schmelze wird durch eine intelligente Regelung des Druckkopfes erreicht, wobei asynchrone, um den Korrekturfaktor angepasste Bewegungen des Kolbens durch den Einsatz eines elektronischen Getriebes an der Aktorvorrichtung erfolgen. Der Korrekturfaktor, der sich insbesondere aus der ermittelten Federkonstante der Schmelze ergibt, wird sozusagen in das System eingemischt. Daher weist das Verfahren in vorteilhafter Weise keine Einschränkung auf synchrone Bewegungen analog üblicher NC Systeme auf.

In einer Weiterbildung des Verfahrens umfasst das Umwandeln des Materials von einer festen Phase über eine plastische Phase in eine flüssige Phase zumindest folgenden Schritt:
- Erhitzen des Materials durch ein oder mehrere Heizelemente des Düsenkopfes.

Die Prozesse des Verdichtens und des Umwandelns finden zum größten Teil gleichzeitig statt, da während beider Prozesse Heizenergie über ein oder mehrere Heizzonen in den Druckkopf eingebracht wird.

Eine elektrisch angetriebene Aktorvorrichtung erweist sich für diesen Fall als dynamisch und sehr effektiv.

Der Kolben des Druckkopfes umfasst einen ersten Kolbenteil zur Anbindung an der Aktorvorrichtung, einen Kolbenkopf zur Anbindung am ersten Kolbenteil und zur Aufnahme der Kolbennadel. Der erste Kolbenteil ist bevorzugt als Aluminiumhohlkolben ausgebildet, wodurch Kühlmittel durch das erste Kolbenteil geleitet werden kann und dadurch in vorteilhafter Weise eine Kolbenkühlung erreicht wird. Der Kolbenkopf weist an der zur Düse gewandten Seite eine Unterseite auf, wobei die Kolbennadel aus der Mitte der Unterseite herausragt. Die Fläche der Unterseite des Kolbenkopfes abzüglich der virtuellen Fläche der Kolbennadel bildet eine Kolbenfläche zur Erzeugung eines Drucks auf das Material bildet. Die Unterseite des Kolbenkopfes wird durch die Kolbenkühlung mitgekühlt und verringert dadurch lokal die Viskosität der Schmelze, bzw. des plastischen Materials am Kolbenboden. Dadurch wird verhindert, dass flüssige Schmelze in Richtung der Antriebsvorrichtung einfließen kann, wodurch in vorteilhafter Weise ein Verklemmen des Kolbens in der Kolbenbuchse als auch ein Eindringen der Schmelze in die Antriebsvorrichtung verhindert wird. Zudem löst sich das Material beim Zurückziehen einfacher vom Kolbenboden, bzw. der Unterseite des Kolbenkopfes, so dass beim Erreichen eines Start-, bzw. Ausgangspunktes des Kolbens ein einfaches Nachfüllen von Material in einer festen Phase, bzw. von Granulat möglich ist, ohne das Restmaterial am Kolbenboden haftet.

An der Unterseite des Kolbenkopfes, bzw. am Kolbenboden ist bevorzugt ein Temperatursensor angebracht. Aufgrund dieser Anordnung des Temperatursensors ist ein kolbenpositionsabhängiges Thermomanagement des Druckkopfes möglich, wodurch ein schnelleres Aufheizen des Materials erreicht wird, ohne das Schmelze mit der Unterseite des Kolbenkopfes in Kontakt kommt. Dadurch kann in vorteilhafter Weise eine Beschleunigung eines Befüllvorganges des Druckkopfes erreicht werden.

Der Kolbenkopf ist als zylindrisches Bauteil ausgeführt und bevorzugt aus einem thermisch resistenten Material hergestellt. Die Kombination, dass die Ausführung des ersten Kolbenteils aus Aluminium und des Kolbenkopfes aus beispielsweise Stahl ausgeführt ist, erweist sich als vorteilhaft, da so der Kolben einen elastischen oberen Bereich zur Aufnahme der mechanischen Spannungen und einen thermisch resistenten unteren Bereich im Bereich des erhitzten Materials aufweist.

Die Kolbennadel ragt je nach Kolbenposition in die Bohrung des Nierenstücks nur teilweise hinein oder ganz hindurch, wodurch die Kolbennadel in der zentrischen Bohrung des Nierenstücks in vorteilhafter Weise geführt wird.

Das Nierenstück weist konzentrisch angeordnete Öffnungen auf, wobei diese eine fluidische Verbindung zwischen einen in der Kolbenbuchse angeordnetem Hohlraum und einen in einem unteren Teil des Düsenkopfs angeordnetem Schmelzeraum bilden.

Der Hohlraum ist innerhalb der Kolbenbuchse angeordnet und wird durch ein Volumen gebildet, dessen äußere Fläche aus der Innenseite der Kolbenbuchse, der Außenseite der Kolbennadel, der Oberseite des Nierenstücks und der Unterseite des Kolbens gebildet ist.

Innerhalb des Hohlraums wird das Material, bzw. das Granulat durch das Verfahren des Kolbens über die Unterseite des Kolbenkopfs, bzw. die Kolbenfläche verdichtet. Während der Verdichtung des Materials ist das Thermomanagement des Druckkopfs derart eingestellt, dass sich innerhalb des Hohlraums keine flüssige Phase des Materials, bzw. keine Schmelze bildet, sondern das Material als plastische Phase ausgebildet wird. Dadurch wird in vorteilhafter Weise erreicht, dass kein plastifiziertes Material an der Unterseite des Kolbens anhaftet. Jedoch wird während der Verdichtung ein Teil der flüssigen Phase, bzw. Schmelze im Schmelzeraum durch die in den Schmelzeraum eindringende Kolbennadel durch die konzentrisch angeordneten Öffnungen des Nierenstücks aus dem Schmelzeraum heraus in den Hohlraum der Kolbenbuchse gedrückt. Dabei vermischen sich Teile der Schmelze mit Teilen der plastischen Phase. Dabei gibt die Schmelze Energie in die plastische Phase ab wodurch in vorteilhafter Weise ein homogeneres Material erzeugt wird. Das Nierenstück bildet somit einen Mischer, bzw. einen statischen Mischer, da außer der Kolbenbewegung in vorteilhafter Weise keine weiteren beweglichen Teile zur Vermischung der plastischen mit der flüssigen Phase nötig ist. Die Ausgestaltung des Nierenstücks sorgt somit in vorteilhafter Weise für eine Blendenwirkung, die zu einer besseren Durchmischung des Materials, bzw. der Schmelze mit dem plastifiziertem Material führt.

Das Nierenstück leitet die Heizenergie des Heizelements aus dem Düsenkopf sowohl in die Schmelze als auch in die Kolbennadel, was in vorteilhafter Weise für ein verbessertes Energiemanagement beim Aufheizen der Schmelze sorgt.

Das Nierenstück kann ferner als ein separates Bauteil ausgeführt oder einstückig mit der Kolbenbuchse ausgebildet sein.

Ferner ist im Schmelzeraum ein Drucksensor für den Druck p_{L}, und/oder ein Temperatursensor für die Temperatur T_{L} der flüssigen Phase angeordnet.

Die Messung des Drucks p_{L} ist der primäre Parameter, der über die Ausbringung, bzw. den Austrag oder auch Massenstrom an Schmelze aus der Austrittsöffnung entscheidet. Eine zusätzliche Messung der Temperatur T_{L} ermöglicht es, bei der Bestimmung des Massenstroms Q auch die Temperaturabhängigkeit der Viskosität des Materials zu berücksichtigen. Durch den Kolbenvorschub kann die zu dosierende Menge exakt geregelt werden. Für die Qualität des hergestellten Bauteils, bzw. Objekts ist die Kontrolle der Temperatur T_{L}, insbesondere in Form einer konstanten und genauen Regelung, sogar wichtiger, um eine thermische Degradation des Materials zu vermeiden.

Zudem ist an der Aktorvorrichtung und/oder am Kolben ein Wegmesssystem für die Position s des Kolbens, und/oder ein Sensor für die vom Kolben auf das Material ausgeübte Kraft F oder für einen auf den Kolben ausgeübten Hydraulikdruck p_{H}, vorgesehen.

Der Vorschub des Kolbens ist ein Maß für die Menge an auszutragendem Material. Diese Menge kann unter anderem über das Wegmesssystem kontrolliert werden. Weiterhin korreliert die Kraft F unmittelbar mit dem Druck in dem Material.

Ferner ist am Kolben, insbesondere an der Unterseite des Kolbenkopfes des Kolbens ein Temperatursensor für die Temperatur T_{K} der plastischen Phase des Materials angeordnet.

Aufgrund dieser Anordnung des Temperatursensors ist ein kolbenpositionsabhängiges Thermomanagement des Druckkopfes möglich, wodurch ein schnelleres Aufheizen des Materials erreicht wird, ohne das Schmelze mit der Unterseite des Kolbenkopfes in Kontakt kommt. Dadurch kann in vorteilhafter Weise eine Beschleunigung eines Befüllvorganges des Druckkopfes, bzw. eine Reduzierung der benötigten Zeit des Befüllvorganges erreicht werden.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Kurze Beschreibung der Zeichnung

Es zeigen:
Fig. 1 einen Druckkopf für einen 3D-Drucker zur Durchführung des erfindungsgemäßen Verfahrens;
Fig. 2 eine weitere Darstellung des Druckkopfes;
Fig. 3 einen Ausschnitt des Druckkopfes;
Fig. 4 eine schematische Darstellung des Druckkopfes;
Fig. 5 ein Ablaufdiagramm eines Verfahrens mit erfindungsgemäßen Teilschritten zum Bereitstellen druckfähiger Schmelze;
Fig. 6 einen Ausschnitt des Druckkopfes mit einem Druckverlauf;
Fig. 7 verschiedene Positionen eines Kolbens des Druckkopfes;
Fig. 8 ein Ablaufdiagramm eines Verfahrens zum Befüllen eines Hohlraums des Druckkopfes;
Fig. 9 ein Ablaufdiagramm eines Verfahrens zum Verschließen eines Öffnungsquerschnitts einer Kolbenbuchse des Druckkopfes;
Fig. 10 ein Ablaufdiagramm eines Verfahrens zum Umwandeln eines Materials von einer festen Phase über eine plastische Phase in eine flüssige Phase;
Fig. 11 ein Ablaufdiagramm eines Verfahrens zum Verdichten des Materials;
Fig. 12 ein Ablaufdiagramm eines Verfahrens zum Ermitteln einer Federkonstante der flüssigen Phase des Materials und
Fig. 13 ein Ablaufdiagramm eines Verfahrens zur Druckvorbereitung der flüssigen Phase des Materials.

### Ausführungsbeispiele

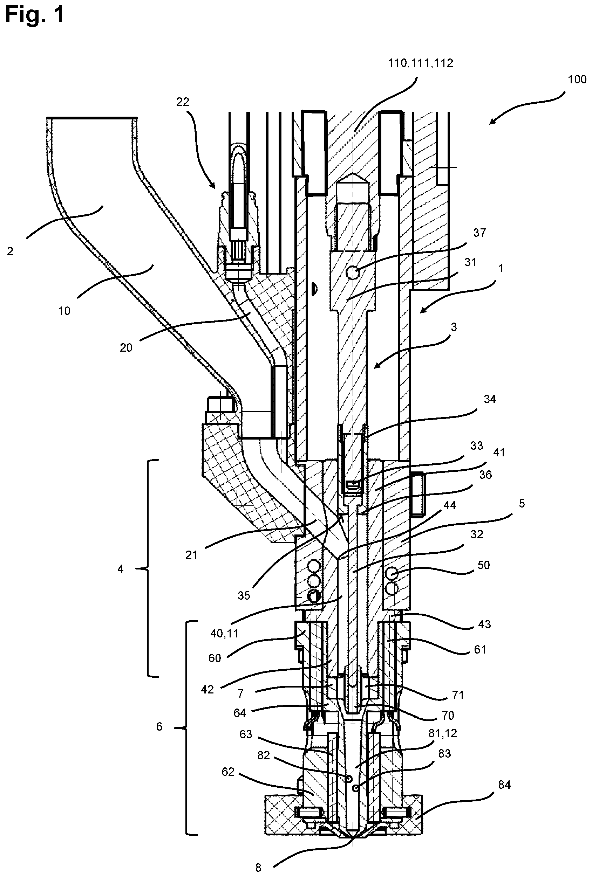

Fig. 1 zeigt einen Druckkopf 100 für einen 3D-Drucker, umfassend eine in einem Gehäuse 1 des Druckkopfes 100 angeordnete Aktorvorrichtung 110 zur Ansteuerung eines Kolbens 3, eine Zuführeinrichtung 2 für ein druckbares Material 10, ein am Gehäuse 1 und der Zuführeinrichtung 2 angeordneten Flansch 5 mit einer Kühlvorrichtung 50, ein Düsenkopf 6 mit Heizelementen 61, 63 zur Umwandlung des Materials 10 von einer festen Phase 10 über eine plastische Phase 11 in eine flüssige Phase 12 und eine Düse 8 zur Ausbringung der flüssigen Phase 12 des Materials 10 aus dem Düsenkopf 6. Der Druckkopf 100 umfasst eine separate Kolbenbuchse 4 zur Führung des Kolbens 3.

Der durch die Kühlvorrichtung 50 innengekühlte Flansch 5 sorgt für eine thermische Trennung des unteren beheizten Bereichs des Druckkopfes 100 zur Aktorvorrichtung 110, bzw. zum Antrieb des Kolbens 3.

Der Kolben 3 umfasst ein erstes Kolbenteil 31 zur Anbindung des Kolbens 3 an der Aktorvorrichtung 110, einen Kolbenkopf 34, der an dem ersten Kolbenteil 31 befestigt ist und in Richtung der Düse 8 eine Kolbennadel 32 aufnimmt. Am Kolben 3, bzw. an einer Unterseite 35 des Kolbenkopfes 34 ist ein Temperatursensor 36 zur Messung der Temperatur T_{K} der plastischen Phase 11 des Materials angeordnet. Die Unterseite 35 des Kolbenkopfes 34 bildet einen Kolbenboden 35. Der erste Kolbenteil 31 ist bevorzugt als Aluhohlkolben ausgebildet, wobei dieser im Inneren einen Hohlraum aufweist, der als Kühlkanal ausgebildet ist. Am unteren Ende des ersten Kolbenteils 31 ist eine Kolbenkühlung 33 angeordnet, die über ein Kühlmittelsystem gekühlt wird.

Die Kolbenkühlung 33 sorgt für eine Erstarrung des Materials 11, 12 am Kolbenboden 35 und dichtet dadurch den Kolben 3 in Richtung der Aktorvorrichtung 110 ab, bzw. verhindert dadurch ein Einfließen flüssiger Schmelze 12 in Richtung der Aktorvorrichtung 110. Als Kühlmittel wird bevorzugt eine Kühlflüssigkeit eingesetzt, wobei diese über Anschlüsse und flexible Leitungen durch das Gehäuse 1 in einen Kühlanschluss 37 des ersten Kolbenteils 31 gefördert wird.

Die Kühlvorrichtung 50 im Flansch 5 wird durch das gleiche Kühlmittelsystem mit Kühlmittel versorgt.

Durch die Abkühlung des Materials 11, 12 am Kolbenboden 35 verringert sich lokal die Viskosität des Materials 11, 12, wodurch sich dieses beim Zurückziehen des Kolbens 3 von diesem löst, ohne Fäden zu ziehen. Dabei wird Raum für neues Material 10 geschaffen.

Fig. 1 zeigt den Kolben 3 in einer Ausgangsposition zur Befüllung des Druckkopfes 100 mit druckbarem Material 10, welches über die Zuführeinrichtung 2 in den Druckkopf 100 zugeführt wird.

Die Zuführeinrichtung 2 ist trichterförmig ausgebildet, wobei das Material 10, das bevorzugt ein Granulat ist, von oben in eine Öffnung der Zuführeinrichtung 2 eingefüllt wird. Das Material 10 gelangt durch Schwerkraft bis zu einer Öffnung 21, bzw. einem Öffnungsquerschnitt zur Kolbenbuchse 4. Im unteren Bereich der Zuführeinrichtung 2 oberhalb der Öffnung 21, ist ein Luftkanal 20 angeordnet. Dieser wird durch ein pneumatisches Ventil 22 mit Luftimpulsen beaufschlagt. Das pneumatische Ventil 22 und der Luftkanal 20 bilden eine Einblasvorrichtung, die das Granulat 10 intervallartig derart mit Luftstöße beaufschlagt, dass dieses in Richtung des weiter oben gelegenen Bereichs der Zuführeinrichtung 2 geschleudert wird und sich dadurch die einzelnen Granulatstücke 10 voneinander lösen. Beim Ausschalten des Luftstroms fällt das sich im unteren Bereich der Zuführeinrichtung 2 befindliche Granulat 10 bei geöffnetem Öffnungsquerschnitt 21 in die Kolbenbuchse 4.

Die Einblasvorrichtung der Zuführeinrichtung 2 verhindert dadurch ein Verklemmen der Granulatstücke 10, wodurch ein Verstopfen der Zuführvorrichtung 2 verhindert wird und sie sorgt für ein sicheres Auffüllen der Kolbenbuchse 4 mit Granulat 10. Ferner können kleinere Durchmesser im Einlass der Zuführeinrichtung 2 verwendet werden.

Der Prozess des Nachfüllens erfordert das Hinterblasen des Granulats 10, wodurch ein Effekt des Anhebens des Granulats entsteht, so dass dieses anschließend in den Druckkopf 100 rutscht. Das Aufwirbeln ist für einen automatisierten Einsatz notwendig und durch den entstehenden Schwerkraftimpuls, bzw. Schlag rutscht das Granulat 10 nach.

Die Kolbenbuchse 4 weist ein in den Flansch 5 hineinragenden oberen Teilbereich 41 und ein in einen oberen Teilbereichs 60 des Düsenkopfes 6 hineinragenden unteren Teilbereich 42 auf. Zwischen dem oberen 41 und unteren 42 Teilbereich der Kolbenbuchse 4 ist ein Anschlag 43 angeordnet durch den der Flansch 5 und der Düsenkopf 6 voneinander getrennt sind. Die Öffnung 21, bzw. der Öffnungsquerschnitt ist im oberen Teilbereich 41 der Kolbenbuchse 4 angeordnet und weist an der Innenfläche der Kolbenbuchse 4 einen Anschnitt 44 auf. Der Anschnitt 44 bewirkt, dass beim Schließen des Öffnungsquerschnitts 21 durch den Kolben 3 Granulat 10 zwischen dem Anschnitt 44 und dem Kolbenboden 35 abgeschert wird, bis der Kolbenboden 35 eine Position unterhalb des Anschnitts 44 erreicht hat.

Die Kolbenbuchse 4 weist am Anschnitt 44 einen stumpfen Winkel auf, wobei dieser scharfkantig und gehärtet ist. Dabei ist eine lokale Härtung von Vorteil. Der Anschnitt 44 kann in einer alternativen Ausführung auch durch einen separaten Einsatz, analog einer Wendeplatte, gebildet sein.

Die Bauform des Anschnitts 44 sorgt in vorteilhafter Weise für eine Verringerung der notwendigen Kräfte zum Abscheren des Granulats 10, wodurch Energie gespart werden kann und die Materialen der Kolbenbuchse 4 und des Kolbens 3 weniger verschleißanfällig sind. Die Kante des Anschnitts 44 ist dabei extrem verschleißanfällig.

Am unteren Teilbereich 42 der Kolbenbuchse 4 ist ein Nierenstück 7 angeordnet ist, wobei das Nierenstück 7 eine zentrisch verlaufende Bohrung 70 zur Aufnahme einer Kolbennadel 32 des Kolbens 3 aufweist.

Das Nierenstück 7 weist ferner konzentrisch angeordnete Öffnungen 71 auf, die eine fluidische Verbindung zwischen einem in der Kolbenbuchse 4 angeordnetem Hohlraum 40 und einem in einem unterem Teil 62 des Düsenkopfs 6 angeordnetem Schmelzeraum 81 bilden. Der Hohlraum 40 ist innerhalb der Kolbenbuchse 4 angeordnet und wird durch die Innenseite der Kolbenbuchse 4, der Außenseite der Kolbennadel 32, der Oberseite des Nierenstücks 7 und der Unterseite 35 des Kolbens 3 gebildet.

Eine bevorzugte Aufgabe des Nierenstücks 7 ist die Wärmeleitung, bzw. Energieübertragung von den Heizelementen 61, 63 des Düsenkopfes 6 in die flüssige Phase 12 des Materials, bzw. der Schmelze 12. Dies wird insbesondere durch eine Erhöhung der Kontaktfläche zum Hohlraum 40 und somit der plastischen Phase 11 des Materials erreicht.

Eine weitere Aufgabe ist die Führung der Kolbennadel 32, wobei der Kontakt der Kolbennadel 32 innerhalb der Bohrung 70 zusätzlich für ein Anheizen der Kolbennadel 32 auf die benötigte Prozesstemperatur sorgt. Die Endgültige Prozesstemperatur wird erst im Düsenkopf 6 zu Düse 8 hin erreicht.

Während eines Befüllvorganges des Druckkopfes 100 wird die Düse 8, insbesondere beim Verdichten 630, verschlossen und beim Ansteuern des Kolbens 3 durch die Aktorvorrichtung 110 wird das sich im Hohlraum 40 und Schmelzeraum 81 angeordnete Material 10, 11, 12 durch den Kolbenvorschub komprimiert.

Der Düsenkopf 6 umfasst die Heizelemente 61, 63 des Druckkopfes 100, wobei ein erstes Heizelement 61 im oberen Düsenkopf 60 angeordnet ist und ein zweites Heizelement 63 im unteren Düsenkopf 62 angeordnet ist. Der obere Düsenkopf 60 weist einen Teilabschnitt 64 auf, der zwischen dem oberen 60 und dem unteren 62 Düsenkopf angeordnet ist und an dem das Nierenstück 7 aufliegt. Im Bereich der Düse 8 ist ein Kühlring 84 an dem Düsenkopf 6 angeordnet. Dieser kühlt das zu druckende Bauteil und es schirmt das Bauteil thermisch vom Druckkopf 100 ab.

Die Heizelemente 61, 63 im Düsenkopf 6 erhitzen das Material 10, 11, 12 innerhalb des Hohlraums 40, des Nierenstücks 7 und des Schmelzeraums 82 bis die flüssige Phase 12 des Materials ihre Prozesstemperatur erreicht hat und aus der Düse 8 ausgetragen werden kann. Der Schmelzeraum 82 ist derart ausgebildet, dass er sich von dem Teilabschnitt 64 des oberen Düsenkopfes 60 bis zur Düse 8 verjüngt. Der konische Zulauf des Schmelzeraums 81 ermöglicht eine Steigerung des Volumenstroms und verhindert die Ablagerungen des Materials an der Innenwand des Düsenkopfs 6. Dadurch, dass im Verhältnis zu einem zylinderförmigen Schmelzeraum 81, weniger Material 12, bzw. Volumen in einem konisch zulaufenden Schmelzeraum 81 ist, wird der Mischprozess weiter optimiert. Die Kolbennadel 32 muss dadurch weniger Volumen verdrängen, um beim Verdichten Teile der Schmelze 12 durch die Öffnungen 71 des Nierenstücks 7 aus dem Schmelzeraum 81 in den Hohlraum 40 zurückzudrängen.

Ferner umfasst der Druckkopf 100 weitere Sensoren, wobei im Schmelzeraum 81 ein Drucksensor 83 für den Druck p_{L}, und ein Temperatursensor 82 für die Temperatur T_{L} der flüssigen Phase 12 des Materials angeordnet ist. Weitere Sensoren sind an der Aktorvorrichtung 110 angeordnet, wobei ein Wegmesssystem 111 für die Position s des Kolbens 3, und ein Sensor 112 für die vom Kolben 3 auf das Material 10, 11 ausgeübte Kraft F oder für einen auf den Kolben 3 ausgeübten Hydraulikdruck p_{H}, vorgesehen sind. In einer alternativen Ausführung können die Sensoren 111, 112 auch am Kolben 3 des Druckkopfes 100 angeordnet sein.

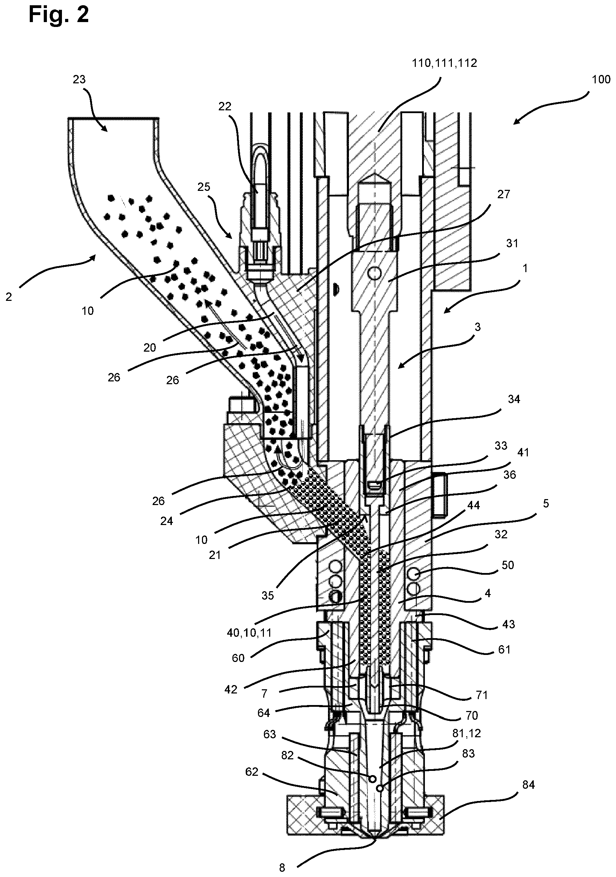

Fig. 2 zeigt eine weitere Darstellung des Druckkopfes 100, wobei die feste Phase 10 des Materials die Granulatstücke 10 umfasst und die Zuführeinrichtung 2 die Einblasvorrichtung 25 zum Lösen der Granulatstücke 10 voneinander aufweist. Die Einblasvorrichtung 25 umfasst das pneumatisches Ventil 22 und den Luftkanal 20, wobei der Luftkanal 20 in einem Gehäuseteil 27 der Zuführeinrichtung 2 angeordnet ist und in einem unteren Bereich 24 der Zuführeinrichtung 2 oberhalb des Öffnungsquerschnitts 21 des Flansches 5 mündet.

Der Luftkanal 20 ist durch das pneumatisches Ventil 22 mit Luftimpulsen 26 beaufschlagbar, wobei die Luftimpulse 26 derart im unteren Bereich 24 auf die Granulatstücke 10 wirken, dass sich diese voneinander lösen.

Die Zuführeinrichtung 2 ist trichterförmig ausgebildet, wobei die Granulatstücke 10 von oben in eine Öffnung 23 der Zuführeinrichtung 2 eingefüllt werden. Das Material 10 gelangt durch Schwerkraft bis zum Öffnungsquerschnitt 21 des Flansches 5 bis zur Kolbenbuchse 4, bzw. zum Öffnungsquerschnitt 21 der Kolbenbuchse 4. Im unteren Bereich 24 der Zuführeinrichtung 2 oberhalb des Öffnungsquerschnitts 21 des Flansches 5, ist ein Luftkanal 20 der Einblasvorrichtung 25 angeordnet. Der Luftkanal 20 wird durch das pneumatisches Ventil 22 mit Luftimpulsen 26 beaufschlagt. Die Einblasvorrichtung 25 umfasst das pneumatische Ventil 22 und den Luftkanal 20, wobei das Granulat 10 intervallartig derart mit Luftstöße beaufschlagt wird, dass dieses in Richtung des weiter oben gelegenen Bereichs der Zuführeinrichtung 2 geschleudert wird und sich dadurch die einzelnen Granulatstücke 10 voneinander lösen. Beim Ausschalten der Einblasvorrichtung 25 fällt das sich im unteren Bereich 24 der Zuführeinrichtung 2 befindliche Granulat 10 bei geöffnetem Öffnungsquerschnitt 21 in einen Hohlraum 40 der Kolbenbuchse 4. Die Einblasvorrichtung 25 der Zuführeinrichtung 2 verhindert dadurch ein Verklemmen der Granulatstücke 10, wodurch ein Verstopfen der Zuführvorrichtung 2 verhindert wird und sie sorgt für ein sicheres Auffüllen der Kolbenbuchse 4 mit Granulat 10. Der Prozess des Nachfüllens erfordert das Hinterblasen des Granulats 10, wodurch ein Effekt des Anhebens des Granulats entsteht, so dass dieses anschließend in den Druckkopf 100 rutscht. Das Aufwirbeln ist für einen automatisierten Einsatz notwendig und durch den entstehenden Schwerkraftimpuls, bzw. Schlag rutscht das Granulat 10 nach.

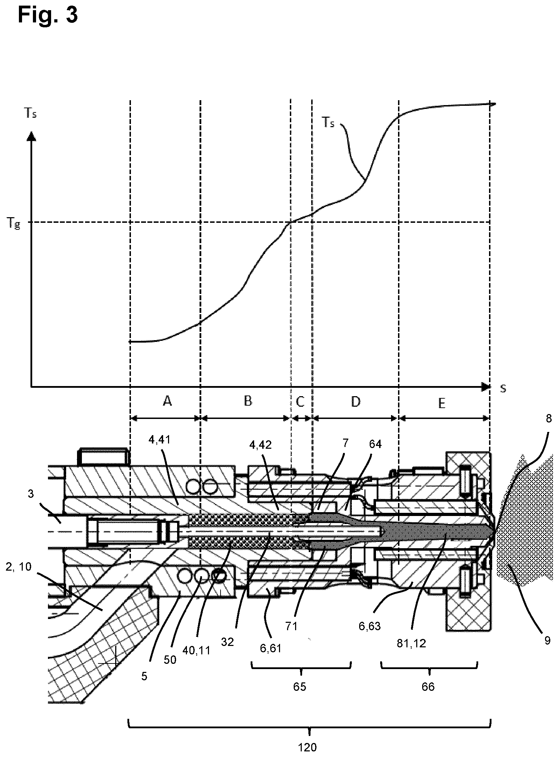

Fig. 3 zeigt einen Ausschnitt des Druckkopfes 100 in einer um 90° gedrehten Ansicht, wobei ausgehend vom oberen Teilbereich 41 der Kolbenbuchse 4 über das Nierenstück 7 bis hin zur Düse 8 Zustandszonen A, B, C, D, E des mit Material 10, 11, 12 befüllten Druckkopfes 100 während des Betriebs dargestellt sind. Die Zustandszonen A, B, C, D, E stellen einen Aggregatzustand des Materials 10 in Abhängigkeit seiner Temperatur Ts dar, wobei der Aggregatzustand des Materials 10 über die Zustandszonen A, B, C, D, E hinweg von einer festen Phase 10 über eine plastische Phase 11 in eine flüssige Phase 12 veränderbar ist.

Die Temperatur T_{S}, bzw. der Temperaturverlauf des Materials 10, 11, 12 innerhalb des Druckkopfes 100 ist in einem über dem Druckkopf 100 dargestellten Diagramm gezeigt, wobei diese über den Weg s, bzw. der Länge eines Arbeitsbereichs 120 des Druckkopfes 100 dargestellt ist.

Die Zustandszonen A, B, C, D, E des Druckkopfes 100 umfassen eine Kalte Zone A mit Material in fester Phase 10, eine Plastifizierungszone B mit Material in plastischer Phase 11, eine Schmelzezone D und eine Prozesszone E mit jeweils Material in flüssiger Phase 12. Ferner umfassen die Zustandszonen eine Mischzone C mit Material in plastischer 11 und flüssiger 12 Phase.

Die Kühlvorrichtung 50 im Flansch 5 und die im Kolben 3 integrierte Kolbenkühlung 33 sind vorgesehen, um die Temperatur T_{S} der plastischen Phase 11 des Materials in der Plastifizierungszone B auch dann unterhalb einer Glasübergangstemperatur T_{g} zu halten, ab der das Material 11 plastifiziert und in eine flüssige Phase 12 übergeht. Die Plastifizierungszone B mit dem Material in plastischer Phase 11 beschreibt in den hier gezeigten Ausführungen einen Zustand des Materials, bzw. des Granulats in dem sich die Viskosität des Granulats bereits verändert, wodurch ein Verdichtungs- und ein Mischprozess optimiert werden, jedoch geht die plastische Phase 11 des Granulats gerade noch nicht in die flüssige Phase 12 über.

Ferner umfasst der Düsenkopf 6 zwei Heizzonen 65, 66. Das erfindungsgemäße Verfahren kann ebenso mit einer oder mehreren Heizzonen ausgeführt werden. In der ersten Heizzone 65 sind ein Teilbereich der Plastifizierungszone B, die Mischzone C und ein Teilbereich der Schmelzezone D angeordnet, wobei ein erstes Heizelement 61 im oberen Düsenkopf 60 derart angeordnet ist, dass die Heizenergie vom ersten Heizelement 61 über den unteren Teilbereich der Kolbenbuchse 42, das Nierenstück 7 und einem Teilabschnitt 64 des oberen Düsenkopfs in das Material 10, 11, 12 einbringbar ist.

In der zweiten Heizzone 66 sind ein Teilbereich der Schmelzezone D und die Prozesszone E angeordnet, wobei ein zweites Heizelement 63 im unteren Düsenkopf 62 derart angeordnet ist, dass die Heizenergie vom zweiten Heizelement 63 über den unteren Düsenkopf 62 in die flüssige Phase 12 des Materials einbringbar ist.

Aus dem Diagramm ist zu entnehmen, dass sich die Temperatur T_{S} des Materials 10, 11, 12 stetig über den Weg s des Arbeitsbereichs 120 des Druckkopfes 100 erhöht. In der Kalten Zone A ist die Wirkung der Kühlvorrichtung 50 des Flansches 5 vorherrschend, wodurch das Granulat 10 nur langsam über den Weg s erwärmt wird. Ab der Plastifizierungszone B beginnt der Einfluss der ersten Heizzone 65 mit dem ersten Heizelement 61 zuzunehmen, wobei die Temperaturkurve bis zum Erreichen der Glasübergangstemperatur T_{g} stark ansteigt und ab dort die Mischzone C beginnt. Die Temperatur Ts steigt in der Mischzone C mit einer geringeren Steigung weiter an bis die Schmelzezone D erreicht wird. Dort beginnt die Einflusszone der zweiten Heizzone 66 mit dem zweiten Heizelement 63, wobei dieses die Temperatur Ts der Schmelze 12 stark ansteigen lässt, bis die Prozesstemperatur der Schmelze 12 in der Prozesszone E erreicht wird und druckfähige Schmelze 12 entstanden ist.

Die Temperatur Ts muss so eingestellt sein, dass das Granulat 10 beim Befüllen in den Hohlraum 40 hineinrieseln kann, ohne zu verkleben aber auch derart vorgewärmt wird, dass ein Abscheren des Materials 10, 11 am Anschnitt 44 mit möglichst wenig Kraftaufwand möglich ist. Das Temperaturmanagement des Druckkopfes 100 ist dabei so eingestellt, dass die Kühlvorrichtung 50 im Flansch 5 eine Kühltemperierung von ca. 40°C in die Kolbenbuchse 4 und dadurch in das Material 10, 11 einbringt und das erste Heizelement 61 der ersten Heizzone 65 eine Heiztemperierung von ca. 30°C unterhalb der Glasübergangstemperatur T_{g}, bzw. der Schmelzetemperatur des Materials 10, 11, 12.

Dieser Effekt wird durch die Kolbenkühlung 33 unterstützt. Durch die Abkühlung des Materials 11, 12 am Kolbenboden 35 verringert sich lokal die Viskosität des Materials 11, 12, wodurch sich dieses beim Zurückziehen des Kolbens 3 von diesem löst, ohne Fäden zu ziehen. Dabei wird Raum für neues Material 10 geschaffen, wenn der Kolben 3 den Öffnungsquerschnitt 21 zur Zuführeinrichtung 2 freigibt.

Der Temperatursensor 36 am Kolbenboden 35 misst die Temperatur T_{K} an der Kontaktstelle des Kolbens 3 zum Material 10, 11, wodurch die Kühl- und die Heizleistung des Druckkopfes 100 berechnet werden kann, so dass die Glasübergangstemperatur T_{g} des Materials 10 nicht überschritten wird. Aufgrund der Anordnung des Temperatursensor 36, bzw. Temperaturfühlers am Kolbenboden 35 ist ein kolbenpositionsabhängiges Regeln der Heizelemente 61, 63 und dadurch ein Einstellen der Temperatur T_{S} möglich. Dadurch wird ein schnelleres Aufheizen des Materials 11, 12 erreicht. Das Thermomanagement des Druckkopfes 100 ermöglicht so auch eine Verarbeitung von Kunststoffen mit niedriger Schmelztemperatur von kleiner 60 bis 80°C.

Während eines Verdichtungsprozesses zur Herstellung von flüssiger Phase 12 des Materials in der Prozesszone E ist die Düse 8 verschlossen. Die Düse 8 kann beispielsweise durch ein nicht dargestelltes Verschlussventil verschlossen werden, oder durch das Positionieren des Druckkopfes 100 auf eine Platte im Bauraum des Druckers. Ferner kann auch ein bereits gedruckter Bereich eines Bauteils 9 angefahren werden und die Düse 8 dadurch verschlossen werden. Die Kolbennadel 32 ist in diesem Beispiel während des Verdichtungsprozesses derart in den Schmelzeraum 81 eingetaucht und bewegt sich weiter in diesen hinein, dass dadurch Teile der flüssigen Phase 12 aus der Schmelzezone D zurück in die Mischzone C verdrängt werden, wodurch sich in der Mischzone C die flüssige Phase 12 mit der plastischen Phase 11 aus der Plastifizierungszone B vermischt.

Die flüssige Phase 12 aus der Schmelzezone D wird dabei aus dem oberen Bereich des Schmelzeraums 81 durch die Öffnungen 71 des Nierenstücks 7 zurück in den Hohlraum 40 der Kolbenbuchse 4 in die Mischzone C verdrängt.

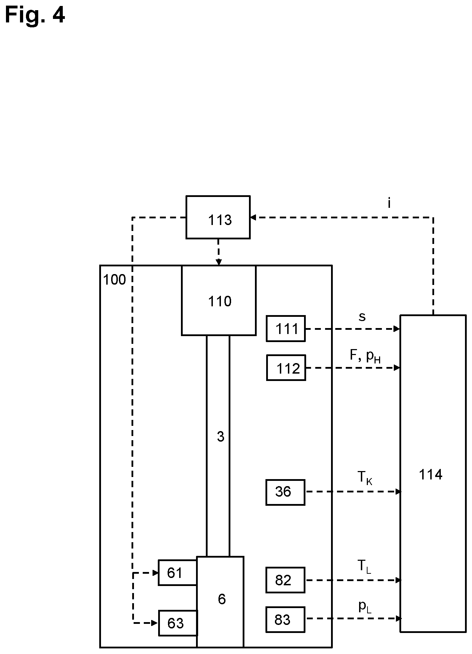

Fig. 4 zeigt eine schematische Darstellung des Druckkopfes 100 mit einer Steuer- und Regeleinheit 113 für eine aktive Regelung der Aktorvorrichtung 110 zum Verfahren des Kolbens 3 und einer Auswerteeinheit 114, die dazu ausgebildet ist, die Messwerte der Sensoren 36, 82, 83, 111, 112 auszuwerten und die Ergebnisse an die Steuer- und Regeleinheit 113 zur aktiven Regelung der Aktorvorrichtung 110 und zur aktiven Regelung der Heizelemente 61, 63 weiterzugeben.

Die Steuer- und Regeleinheit 113 ist für eine aktive Regelung der Aktorvorrichtung 110 zum Verfahren des Kolbens 3 entsprechend einer auszuführenden Betriebsstrategie zum Befüllen und Drucken und für eine aktive Regelung der Temperaturen des ersten 61 und zweiten 63 Heizelements vorgesehen.

Maßgeblich für die aktive Regelung der Aktorvorrichtung 110 sind die von der Auswerteeinheit 114 empfangenen Sensorsignale und die aus den jeweiligen Werten berechneten Ergebnisse.

Der Drucksensor 83 für den Druck p_{L}, und der Temperatursensor 82 für die Temperatur T_{L} der flüssigen Phase 12 sind im Schmelzeraum 81 angeordnet. Das Wegmesssystem 111 für die Position s des Kolbens 3, und der Sensor 112 für die vom Kolben 3 auf das Material 10, 11 ausgeübte Kraft F oder für einen auf den Kolben 3 ausgeübten Hydraulikdruck p_{H}, sind an der Aktorvorrichtung 110 oder am Kolben 3 angeordnet.

Ferner ist am Kolben 3 der Temperatursensor 36 für die Temperatur T_{K} der plastischen Phase 11 des Materials angeordnet.

Die durch gestrichelte Pfeile dargestellten Signale s, F, p_{H}, T_{K}, T_{L}, p_{L} der Sensoren 111, 112, 36, 82, 83 werden an die Auswerteeinheit 114 übertragen, anschließend in dieser oder in einer Cloud ausgewertet und die Ergebnisse entsprechend einer Betriebsstrategie als Steuergröße i an die Steuer- und Regeleinheit 113 übertragen und die Aktorvorrichtung 110, sowie die Heizelemente 61, 63 entsprechend angesteuert.

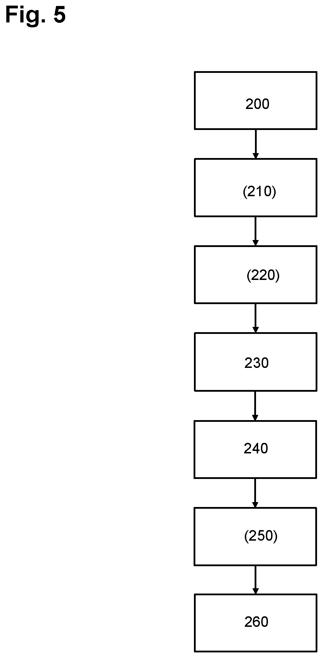

Fig. 5 zeigt ein Ablaufdiagramm eines Verfahrens 200 zum Bereitstellen druckfähiger Schmelze 12 zum Betreiben des Druckkopfes 100, wobei das Verfahren 200 folgende Schritte umfasst:
- Befüllen 210 eines Hohlraums 40 mit druckbarem Material 10 durch eine Zuführeinrichtung 2,
- Verschließen 220 eines Öffnungsquerschnitts 21 einer Kolbenbuchse 4 durch Vorschub eines Kolbens 3 ausgehend von einer Startposition 3a in Richtung einer Düse 8 des Druckkopfes 100,
- Umwandeln 230 des Materials von einer festen Phase 10 über eine plastische Phase 11 in eine flüssige Phase 12,
- Verdichten 240 des Materials 10, 11, 12,
- Ermitteln 250 einer Federkonstante der flüssigen Phase 12 und
- Druckvorbereitung 260 der flüssigen Phase 12.

Zumindest das Verschließen 220, das Umwandeln 230, das Verdichten 240, das Ermitteln 250 der Federkonstante und die Druckvorbereitung 260 des Verfahrens 200 werden durch eine aktive Regelung der Aktorvorrichtung 110 durch die Steuer- und Regeleinheit 113 durchgeführt, wobei die Ergebnisse der Auswerteeinheit 114 aus den Messwerten der Sensoren 36, 82, 83, 111, 112 an die Steuer- und Regeleinheit 113 weitergegeben werden.

Die Verfahrensschritte werden im weiteren detaillierter ausgeführt.

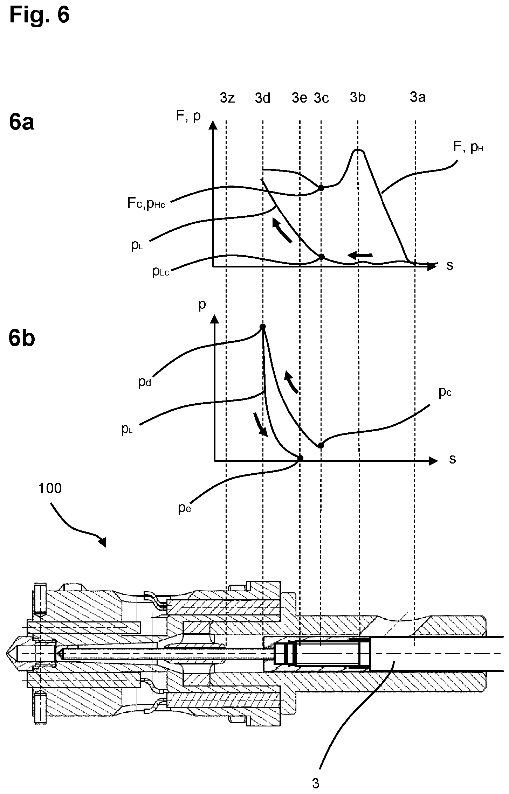

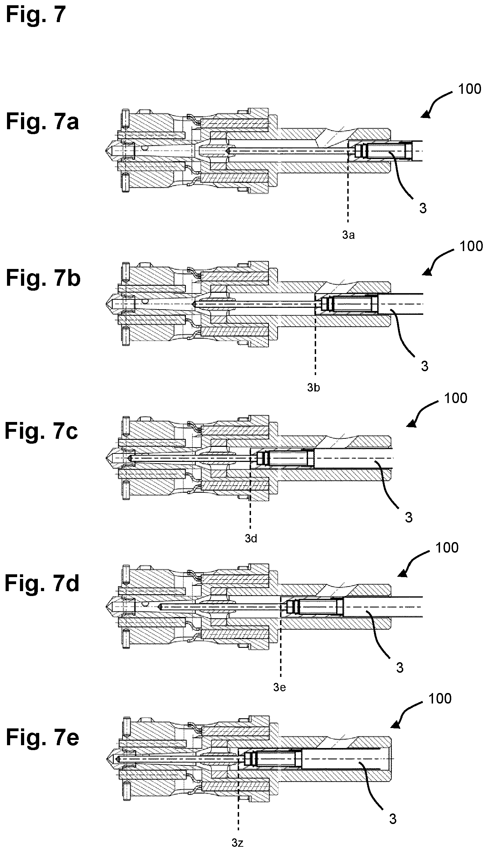

Fig. 6 zeigt einen Ausschnitt einer möglichen Ausführungsform des erfindungsgemäßen Druckkopfes 100 und zwei Diagramme 6a, 6b, die einen Druck-, bzw. Druck-, Kraftverlauf während des Bereitstellens druckfähiger Schmelze 12, bzw. verschiedener Verfahrensschritte des Verfahrens 200 zum Bereitstellen druckfähiger Schmelze darstellen. Fig. 7 zeigt die unterschiedliche Positionen des Kolbens 3 zu den verschiedenen Verfahrensschritten, bzw. Zuständen aus Fig. 6 beginnend bei der Startposition 3a bis zur Endposition 3z des Kolbenbodens 35. Während der Ausführung der Verfahrensschritte sind die Kühlvorrichtungen 50, 33 im Flansch 5 und Kolben 3, sowie die Heizelemente 61, 63 aktiv und der Schmelzeraum 81, sowie das Nierenstück 7 sind mit Schmelze 12 gefüllt und im unteren Teilbereich des Hohlraums 40 befindet sich noch Granulat in plastischer Phase 11.

Die Ausschnitte des dargestellten Druckkopfes 100 entsprechen dem des in den Figuren 1, 3 und 4 dargestellten Druckkopfes 100, so dass die Bezugszeichen der vorherigen Figuren zur Beschreibung der Figuren 6 und 7 herangezogen werden, wobei neue Merkmale und Bezüge, beispielsweise die jeweilige Position des Kolbens 3 mit Bezug zum Kolbenboden 35 in den Figuren 6 und 7 gekennzeichnet ist.

Fig. 6 zeigt im ersten Diagramm 6a zwei Kurvenverläufe, die über dem vom Kolben 3 zurückgelegten Weg s aufgetragen sind. Der Weg s wird von dem Wegmesssystem 111, bzw. Wegsensor 111 an der Aktorvorrichtung 110 oder am Kolben 3 gemessen.

Die obere Kurve stellt einen Kraft-, Druckverlauf für die vom Kolben 3 auf das Material 10, 11 ausgeübte Kraft F oder für den auf den Kolben 3 ausgeübten Hydraulikdruck p_{H} während des Vorschubs des Kolbens 3 durch die Aktorvorrichtung 110 beim Verschließen 220 und Verdichten 240 dar, wobei der Kraft-, bzw. Drucksensor 112 an der Aktorvorrichtung 110 oder am Kolben 3 angeordnet ist.

Die untere Kurve im Diagramm 6a stellt einen Druckverlauf des Schmelzedrucks p_{L} im Schmelzeraum 81 über dem Weg s des Kolbens 3 während des Verdichtens 240 dar. Der Drucksensor 83 für den Druck p_{L} der flüssigen Phase 12, bzw. der Schmelze 12 ist im Schmelzeraum 81 angeordnet.

Im zweiten Diagramm 6b ist ein Teilausschnitt der unteren Kurve des ersten Diagramms 6a dargestellt, wobei auch hier der Druckverlauf des Schmelzedrucks p_{L} im Schmelzeraum 81 über dem Weg s des Kolbens 3 während des Verdichtens 240 dargestellt ist (Kurvenverlauf von p_{c} zu p_{d}).

Fig. 7a zeigt eine Startposition 3a des Kolbens 3 während des Befüllprozesses 210 des Druckkopfes 100, wobei der Kolbenboden 35 an der Oberseite der Öffnung 21 der Kolbenbuchse 4 positioniert ist. Der gesamte Prozessablauf vom Befüllen 210 bis zum Öffnen 820 der Düse während der Druckvorbereitung 260 wird auch Refillprozess genannt, da es sich um einen wiederkehrenden Ablauf handelt, der während des Druckens eines Bauteils 9 beliebig wiederholt wird. Der Refillprozess ist das Verfahren zum Bereitstellen druckfähiger Schmelze 12 zum Betreiben des Druckkopfes 100 für einen 3D-Drucker. Die in Fig. 7a gezeigte Position des Kolbens 3 ist analog der Position des Kolbens 3 aus Fig. 1. Die Öffnung 21, bzw. der Öffnungsquerschnitt 21 der Kolbenbuchse 4 ist geöffnet und das Granulat 10 kann über die Zuführeinrichtung 2 in den Hohlraum 40 der Kolbenbuchse 4 eingebracht werden. Anschließend wird der Kolben 3 durch die Aktorvorrichtung 110 in die in Fig. 7b gezeigte Position 3b gesteuert. Der Kolbenboden 35 gleitet dabei am Anschnitt 44 der Kolbenbuchse 4 vorbei und das von der Öffnung 21 in den Hohlraum 40 überstehende Granulat 10 wird zwischen Kolbenboden 35 und Anschnitt 44 abgeschert. Daher wird diese Position Abscherposition 3b genannt. Nach dem Abscheren 420 ist der Öffnungsquerschnitt 21 verschlossen 220.

Der Kraft-, Druckverlauf F, p_{H} steigt von der Startposition 3a bis zur Abscherposition 3b an, wobei der Kraftaufwand der Aktorvorrichtung 110 am Anschnitt 44, bzw. an der Abscherposition 3b am höchsten ist, da die Aktorvorrichtung 110 die Kraft zum Abscheren des Granulats 10 aufbringen muss. Der Kraftaufwand lässt sich durch geeignete Maßnahmen wie die Optimierung der Anschnittgeometrie in Verbindung mit der Beschaffenheit des Kolbenbodens 35 und einer Vorerwärmung des Granulats 10 reduzieren. Der Druckverlauf p_{L} der Schmelze 12 verändert sich dahingegen nur gering, bzw. steigt kaum an, da die Düse 8 noch geöffnet ist und sich im Schmelzeraum 81 kein Druckaufbau einstellt.

Anschließend beginnt der Verdichtungsprozess 240 und der Kolben 3 wird kraft-, bzw. druckgesteuert durch die Aktorvorrichtung 110 bis zur Position 3c gefahren. Beim Verschieben des Kolbens 3 wird die auf das Material, bzw. Granulat 10, 11 ausgeübte Kraft F oder der auf den Kolben 3 ausgeübter Hydraulikdruck p_{H}, sowie der Druck p_{L} in der Schmelze 12 gemessen. Durch das Verschieben des Kolbens 3 wird das Material 10, 11, 12 vorverdichtet.

Die Position 3c wird definiert durch den Kraft-, bzw. Druckanstieg, das heißt die Position 3c wird angesteuert, wobei kein direkter Punkt, sondern eine Flanke der im Diagramm 6a dargestellten Kurven angesteuert wird. Die Flanke entsteht an einem Wechselpunkt p_{Lc}, F_{c}, p_{Hc} von jeweils der Geraden mit geringer, bzw. keiner Steigung (der Bereich von Position 3a bis Position 3c) bis zum Anstieg der Kurve (an Position 3c), an der eine vordefinierte Steigung, bzw. ein vordefinierter Steigungswinkel erreicht und/oder überschritten wird. Die Position 3c befindet sich im ersten Drittel der Plastifizierungszone B. Das Granulat 10, 11 wird in der Plastifizierungszone B durch den Vorschub des Kolbens 3 komprimiert, wobei sich gleichzeitig in der Schmelzezone D zwischen dem Hohlraum 40 und der Düse 8 Schmelze 12 befindet. Das plastifizierte Granulat 11 wird dadurch in der Mischzone C in die Schmelze 12 hineingedrückt.

Durch das Absenken des Kolbens 3 und analog der Kolbennadel 32 in Richtung Düse 8 tritt bereits Schmelze 12 aus der Düse 8 aus, wodurch erreicht wird, dass möglicherweise noch vorhandene Luft, bzw. Lufteinschlüsse aus dem Düsenkopf 6 verdrängt werden. Dadurch wird die Düse 8 frei.

Die Position 3c wird verfahrens- und materialbedingt mit einer Toleranz versehen, wodurch bei verschiedenen, nacheinander durchgeführten Refillvorgängen des Druckkopfes 100 die Position 3c des Kolbens 3 leicht unterschiedlich sein kann. Die Position 3c ist daher kein fester Punkt. Wenn die Position 3c innerhalb der vorgegebenen Toleranz liegt, ist sichergestellt, dass der Befüllprozess 210 erfolgreich war, das heißt, dass genug Granulat 10 in den Hohlraum 40 eingefüllt wurde und das der Schmelzeraum 81 bereits mit Schmelze 12 befüllt ist. Wenn die Flanke beispielsweise zu weit vor der Position 3c beginnt, ist im Bereich vom Kolbenboden 35 bis zur Düse 8 zu viel hochviskoses, bzw. hartes Material 10, 11 und der Mischprozess in der Mischzone C war ggf. nicht erfolgreich. Wenn die Flanke beispielsweise erst weit hinter der Position 3c beginnt, ist ggf. zu wenig Material 10 nachgefüllt worden.

Nach Erreichen der Position 3c ist das Vorverdichten 610 abgeschlossen und die Düse 8 des Druckkopfes 100 wird verschlossen 620.

Zum Verdichten 630 wird der Kolben 3 ausgehend von Position 3c druckgesteuert vorgeschoben, bis ein vorab definierter Peakdruck p_{d} erreicht wird und der Kolbenboden 35 auf die in Fig. 7c gezeigte Position 3d gefahren wurde. Der Peakdruck p_{d} kann je nach Material 10 und Bedarf zwischen ca. 100 und 300bar liegen.

Anschließend wird die sogenannte Peakdruckposition 3d für einen materialabhängigen vordefinierten Zeitraum gehalten. Der Kolbenboden 35 ragt dabei in die erste Heizzone 65 und die Kolbennadel 32 in den Schmelzeraum 81 hinein und während des Haltens fließt ein Teil der Schmelze 12 aus dem Schmelzeraum 81 des Düsenkopfes 6 durch die Öffnungen 71 des Nierenstücks 7 zurück in die Mischzone C in das dort befindliche plastische Granulat 10. Dadurch wird Restluft verdrängt und Schmelze 12 wird in der Mischzone C homogenisiert. Dadurch wird ein besserer Energiefluss erreicht und ein homogeneres Material 11, 12 erzeugt. Die zurückfließende Schmelze 12 wird plastisch und die Granulatanteile 11, welche in das Nierenstück 7 geschoben werden, werden schmelzeförmig. Dadurch entsteht ein Vermischen des Materials 11, 12.

Der hier beschriebene Haltevorgang 640 dient zudem zur Analyse und zu einem Systemcheck des Druckkopfes 100, da sich folgende Effekte bei der Druckmessung des Drucks p_{L} ergeben können. Ein Druckanstieg des Drucks p_{L} in der Schmelze 12 würde bedeuten, dass die Schmelze 12 ausgast, weil beispielsweise die Temperatur T_{L} zu hoch ist. Zu hohe Schmelzetemperaturen T_{L} sind nicht gewünscht, da Luftplasma entstehen kann, was zu einem chemischen Zerfall führen würde.

Ein starker Druckabfall des Schmelzedrucks p_{L} könnte beispielsweise bedeuten, dass das System des Druckkopfs 100 undicht ist oder noch zu viel Luft im System war. Dieser Effekt könnte auftreten, wenn beispielsweise zu viel kaltes Material 10, 11 im Hohlraum 40 vorhanden war, weil das Temperaturmanagement des Druckkopfes 100 nicht optimal eingestellt war.

Nach Ablauf des vordefinierten Zeitraums wird der Kolben 3 aus der Peakdruckposition 3d von der Aktorvorrichtung 110 druckgesteuert zurückgefahren 710, bis ein Zieldruck pₑ von ca. 0bar erreicht wird. Das System wird entspannt. Dadurch wird erreicht, dass die Schmelze 12 druckentlastet und entlüftet ist, wodurch eine reine Schmelze 12, insbesondere in der Prozesszone E entstanden ist, die nun qualitativ hochwertig und druckfähig ist. Bei Erreichen des Zieldrucks pₑ wird die in Fig. 7d dargestellte Zieldruckposition 3e erreicht, wobei der Kolbenboden 35 außerhalb der ersten Heizzone 65 im Bereich des Anschlags 43 der Kolbenbuchse 4 positioniert ist.

Der nun gemessene Druckunterschied zwischen dem Druck p_{d} der Peakdruckposition 3d und dem Druck pₑ der Zieldruckposition 3e und der zwischen den beiden Punkten 3d, 3e zurückgelegte Weg s ergibt eine Federkonstante 740 der flüssigen Phase 12 des Materials, bzw. der Schmelze 12.

Die Federkonstante ergibt sich aus der Kompressibilität der Schmelze 12 und führt zu einem Korrekturfaktor, bzw. Formfaktor, der zur exakten Ansteuerung des Kolbens 3 durch die Aktorvorrichtung 110 benötigt wird.

Aufgrund der Kompressibilität der Schmelze 12 entsprechen beispielsweise 1,2 Volumeneinheiten eines geometrischen, durch den Kolben 3 zurückgelegten Kolbenwegs s, 1,0 Volumeneinheiten eines ausgetragenen Volumens der Schmelze 12. Ohne Kompressibilität wäre das Verhältnis 1:1.

Dadurch wird erreicht, dass die Aktorvorrichtung 110 den Kolben 3 geregelt ansteuern kann, wobei die Federkonstante es unter anderem ermöglicht, dass der reale Austrag der Schmelze 12 den korrekten, berechneten Volumenstrom der Schmelze 12 in Abhängigkeit einer Bahngeschwindigkeit v_{B} des bewegten Druckkopfes 100 beim Drucken erreicht. Das heißt, dass an jeder Druckposition bei jeder Bahngeschwindigkeit v_{B} des Druckkopfes 100 die jeweils benötigte Menge Schmelze 12 auf das Bauteil 9 ausgebracht wird.

Anschließend wird der Prozess der Ausbringung 270 der Schmelze 12, bzw. der Druckprozess 270 über ein aktives Dekomprimieren 810 durch ein Zurückziehen des Kolbens 3 vorbereitet 260.

Der Kolben 3 wird dabei abhängig von der ermittelten Federkonstante um ca. 1 bis 2 Millimeter zurückgezogen, wodurch erreicht wird, dass keine Schmelze 12 aus der Düse 8, bzw. Düsenöffnung austritt, wenn diese anschließend geöffnet 820 wird. Dies wäre bei einem weiteren Halten der Position 3e aufgrund des vorhandenen offenen Systems durch den Einfluss der Schwerkraft der Fall. Gleichzeitig wird die Schmelze 12 analog einer Feder entlastet.

Anschließend beginnt die weitere Druckvorbereitung des Druckprozesses durch Kompression.

Das Gesamtsystem des Druckkopfes 100 ist, wie bereits beschrieben, ein kompressibles System, da die Schmelze 12 beispielsweise eine Kompression von ca. 20% aufweisen kann. Daher entspricht das durch den Vorschub des Kolbens 3 verdrängte Volumen nicht dem Volumen des ausgetragenen Materials 12, wodurch sich ungenaue und unregelmäßige Austräge ergeben können. Das mögliche Volumen der Schmelze 12 für einen Vorschub des Druckprozesses wird definiert von der Zielposition 3e und dem Weg zur in Fig. 7e gezeigten Endposition 3z.

Aufgrund des oben beschriebenen Effekts, wird die Schmelze 12 während des Druckbeginns komprimiert. Die Kompression der Schmelze 12 im Schmelzeraum 81 zu Druckbeginn wird zu einem Teil über Reibung an der Düsenöffnung der Düse 8 beim "Herauspressen" der Schmelze 12 erzeugt und zu einem Teil über den Widerstand beim Drucken auf das Bauteil 9 oder einen Substratträger, auf dem das Bauteil 9 aufgebaut wird.

Ein gleichmäßiger Austrag der Schmelze 12 wird durch eine intelligente Regelung des Druckkopfes 100 erreicht, wobei asynchrone, um einen Korrekturfaktor angepasste Bewegungen des Kolbens 3 durch den Einsatz eines elektronischen Getriebes an der Aktorvorrichtung 110 erfolgen. Der Korrekturfaktor, der sich insbesondere aus der ermittelten Federkonstante 740 der Schmelze 12 ergibt, wird sozusagen in das System eingemischt. Daher weist der erfindungsgemäße Druckkopf 100 keine Einschränkung auf synchrone Bewegungen analog üblicher NC Systeme auf.

Der Druckprozess wird dabei druckgeregelt durchgeführt, wobei der Druck p_{L} der Schmelze 12 permanent über den Drucksensor 83 im Düsenkopf 6 gemessen wird. Der gemessene Druck p_{L} ist der Druck der durch Austrag der Schmelze 12 auf das Bauteil 9, bzw. auf den Substratträger (falls noch kein Bauteil vorhanden) entsteht. Ohne diesen Effekt, dass man auf ein Objekt druckt, wäre kein Gegendruck an der Düse 8 vorhanden, außer dem eines Reibungsdrucks, wodurch zu viel Material/Schmelze 12 aus der Düse 8 ausgetragen werden würde.

Der Druckprozess wird gestartet, indem aktiv Schmelze 12 durch die intelligente Regelung und Ansteuerung des Kolbens 3 eingemischt wird. Dabei wird "mehr" Hub ausgeführt, um die Kompressibilität der Schmelze 12 auszugleichen. Dabei wird prinzipiell zu viel Schmelze 12 aus der Düse 8 gedrückt, jedoch wird der Drucksensor 83 parallel zur Einmischung der Schmelze 12 ausgelesen, wodurch entsprechend druckabhängig gegengeregelt werden kann.

Eine elektrisch angetriebene Aktorvorrichtung 110 erweist sich für diesen Fall als dynamisch und sehr effektiv.

Während des Druckprozesses 270 wird kontinuierlich die Schmelzetemperatur Ts gemessen und in der Heizzone 2 wird die Schmelze 12 über die Heizelemente 63 im Düsenkopf 6 auf den erforderlichen Sollwert der Prozesstemperatur im Bereich der Prozesszone E geregelt.

Der Kolben 3 wird zum Druckstart entsprechend einer Bahngeschwindigkeit des Druckkopfes 100 von der Aktorvorrichtung 110 angesteuert, wodurch Schmelze 12 aus der Düse 8 ausgetragen wird.

Während des Druckprozesses wird die Steuer- und Regeleinheit 113 des Druckkopfes 100 aktiviert und greift aktiv in die Ansteuerung der Aktorvorrichtung 110 ein, um beispielsweise bei Bedarf einen additiven Sollwert, bzw. eine additive Menge an Material 12 zuzumischen. Falls beispielsweise ein additiver Sollwert zugemischt wird und dadurch mehr Material 12 aus der Düse 8 ausgetragen, bzw. extrudiert wird als durch eine kontinuierliche Ansteuerung, erhöht sich als Resultat auch der Druck p_{L} am Düsenkopf 6. Der additive Sollwert ist dabei der eingemischte Wert, bzw. der zusätzliche Kolbenweg, der zurückgelegt werden muss, um entsprechend des Korrekturwerts, ermittelt aus der Federkonstante 740, das gewünschte Volumen an Schmelze 12 auszutragen. Dadurch wird ein eingeschwungener Zustand erreicht, wodurch die auf das Bauteil 9 ausgetragene Menge der Schmelze 12 konstant bleibt.

Der Einsatz der Kolbennadel 32 sorgt dabei für den vorteilhaften Effekt, dass durch diese eine direkte Volumenverdrängung innerhalb der Schmelze 12 im Schmelzeraum 81 möglich ist, wodurch eine kleinere Federkonstante erreicht wird. Die kleine Federkonstante ermöglicht wiederum eine hohe Dynamik des Druckkopfes 100. Der Effekt ergibt sich daraus, dass durch die Kolbennadel 32 eine direktere Druckübertragung auf die Schmelze 12 erfolgt. Beim Vorschub des Kolbens 3 überträgt somit nicht nur der Kolbenboden 35 einen Druckimpuls zum Austragen der Schmelze 12 aus der Düse 8, sondern auch die näher an der Düse 8 positionierte Kolbennadel 32.

Der Druckprozess ist so lange ausführbar, bis der Kolbenboden 35 die Position 3z erreicht, wobei die Position 3z derart festgelegt ist, dass der Kolbenboden 35 gerade nicht einen mechanischen Anschlag erreicht, sondern wie in Fig. 7e dargestellt, kurz vor Erreichen des Nierenstücks 7 zum Stehen kommt. Danach kann kein Material 12 mehr ausgetragen werden und der oben beschriebene Refillprozess wird erneut gestartet.

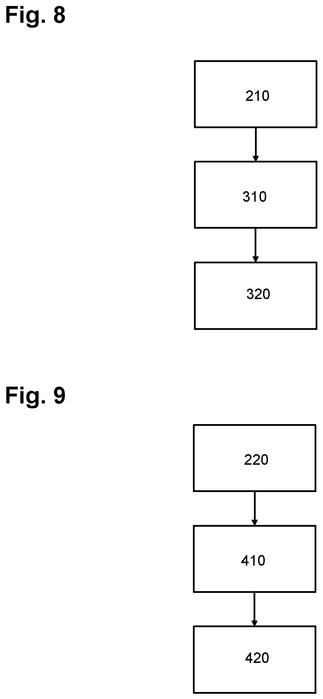

In den Figuren 8 bis 13 sind einzelne Ablaufdiagramme der Verfahrensschritte des Verfahrens 200 ergänzend zu den in den vorhergehenden Figuren beschriebenen Ausführungen der Erfindung dargestellt.

Fig. 8 zeigt ein Ablaufdiagramm eines Verfahrens zum Befüllen 210 des Hohlraums 40 mit druckbarem Material 10 durch die Zuführeinrichtung 2, wobei das Verfahren 210 zumindest folgende Schritte umfasst:
- Einfüllen 310 des Materials 10 über die Öffnung 23 der Zuführeinrichtung 2 in den Druckkopf 100 und
- Erzeugen 320 von Luftimpulsen 26 zum Lösen des Materials 10, insbesondere der Granulatstücke 10 voneinander.

Das Einfüllen 310 der Granulatstücke 10 wird manuell oder automatisiert durchgeführt, wobei die Granulatstücke 10 durch den Einfluss der Schwerkraft in den unteren Bereich 24 der Zuführeinrichtung 2 rutschen.

Das Erzeugen 320 von Luftimpulsen 26 wird in Intervallen durchgeführt und die Granulatstücke 10 werden derart im Bereich der Luftimpulse 26 aufgeschleudert, dass diese beim Herabfallen einen Impuls auf die darunterliegenden Granulatstücke 10 ausüben und diese zum Nachrutschen in den beheizten Hohlraum 40 des Druckkopfes 100 anregen.

Fig. 9 zeigt ein Ablaufdiagramm eines Verfahrens zum Verschließen 220 des Öffnungsquerschnitts 21 der Kolbenbuchse 4 durch den Kolben 3, wobei das Verfahren 220 folgende Schritte umfasst:
- Vorschub 410 des Kolbens 3, ausgehend von der Startposition 3a des Kolbenbodens 35 des Kolbens 3 in Richtung der Düse 8 bis zum Erreichen der Position 3b unterhalb des Anschnitts 44 der Kolbenbuchse 4, wobei
- ein Abscheren 420 des Granulats 10 durch das Vorbeigleiten des Kolbenbodens 35 am Anschnitt 44 erreicht wird.

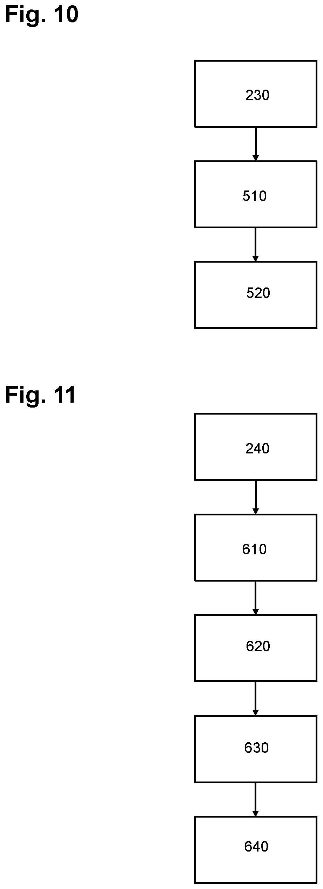

Fig. 10 zeigt ein Ablaufdiagramm eines Verfahrens zum Umwandeln 230 des Materials von einer festen Phase 10 über eine plastische Phase 11 in eine flüssige Phase 12, wobei das Verfahren 230 folgende Schritte umfasst:
- Erhitzen 510 des Materials 10, 11, 12 durch ein oder mehrere Heizelemente 61, 63 des Düsenkopfes 6.

Das Erhitzen kann über Zustandszonen A, B, C, D, E des Druckkopfes 100 hinweg erfolgen, wobei die Zustandszonen A, B, C, D, E einen Aggregatzustand des Materials 10 in Abhängigkeit seiner Temperatur Ts darstellen und der Aggregatzustand des Materials 10, 11, 12 über die Zustandszonen A, B, C, D, E hinweg von einer festen Phase 10 über eine plastische Phase 11 in eine flüssige Phase 12 durch das Einbringen von Heizenergie der Heizelemente 61, 63 verändert wird. Ein weiterer Schritt kann das Vermischen 520 des Materials 11, 12 während des Verdichtens 240 umfassen.

Fig. 11 zeigt ein Ablaufdiagramm eines Verfahrens zum Verdichten 240 des Materials 10, 11, 12. Dieser Verdichtungsprozess 240 umfasst folgende Schritte:
- Vorverdichten 610 des Materials 10, 11, 12 durch Vorschub des Kolbens 3,
- Verschließen 620 der Düse 8,
- Verdichten 630 des Materials 10, 11, 12 durch Vorschub des Kolbens 3 und
- Halten 640 des Kolbens 3 in der Halteposition 3d.

Das Vorverdichten 610 des Materials 10, 11, 12 wird durch Vorschub des Kolbens 3 druck- und/oder kraftgesteuert durchgeführt wird, wobei bis zur Position 3c vorverdichtet wird und diese erreicht ist, wenn eine materialabhängige Steigung und/oder ein materialabhängiger Steigungswinkel einer Kraft- und/oder Druckkurve erreicht und/oder überschritten wird.

Nach dem Vorverdichten 610 wird die Düse 8 des Druckkopfes 100 verschlossen 620.

Das Verdichten 630 des Materials 10, 11, 12 wird durch Vorschub des Kolbens 3 bei verschlossener Düse 8 druckgesteuert durchgeführt und dabei wird die Halteposition 3d angefahren, bis ein Peakdruck p_{d} erreicht wird, bzw. die durch den Peakdruck p_{d} definiert wird.

Während des Verdichtens 630 ist die Düse 8 verschlossen ist und die Kolbennadel 32 taucht derart in den Schmelzeraum 81 des Düsenkopfes 6 ein, dass dadurch ein Teil der flüssigen Phase 12 aus einem oberen Bereich des Schmelzeraums 81 durch Öffnungen 71 des Nierenstücks 7 aus der Schmelzezone D zurück in die Mischzone C verdrängt wird, wodurch sich der Teil der flüssigen Phase 12 mit der plastischen Phase 11 aus der Plastifizierungszone B in der Mischzone C vermischt.

Der Kolben 3 wird in der Halteposition 3d gehalten, wobei während des Haltevorgangs 640 der Druck p_{L} und die Temperatur T_{L} der flüssigen Phase 12 gemessen werden und die Messwerte durch die Auswerteeinheit 114 zur Funktionskontrolle des Verdichtungsprozesses 240 überprüft werden.

Während des Haltens 640 des Kolbens 3 in der Halteposition 3d ist die Düse 8 verschlossen und die Kolbennadel 32 ist derart in den Schmelzeraum 81 eingetaucht, dass dadurch ein Teil der flüssigen Phase 12 aus dem oberen Bereich des Schmelzeraums 81 durch die Öffnungen 71 des Nierenstücks 7 aus der Schmelzezone D zurück in die Mischzone C verdrängt wird, wodurch sich der Teil der flüssigen Phase 12 mit der plastischen Phase 11 aus der Plastifizierungszone B in der Mischzone C vermischt.

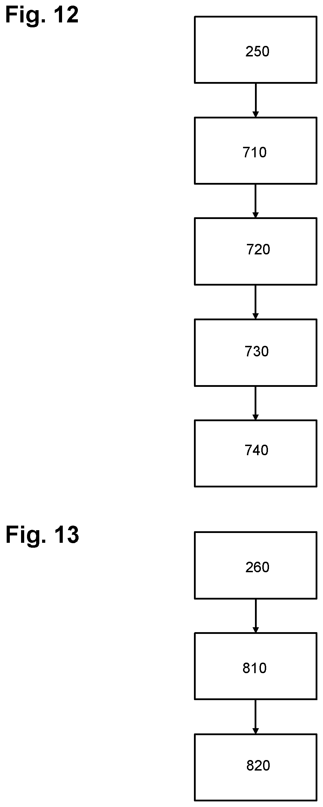

Fig. 12 zeigt ein Ablaufdiagramm eines Verfahrens für ein Beispiel zum Ermitteln 250 der Federkonstante der flüssigen Phase 12, wobei das Verfahren 250 folgende Schritte umfasst:
- druckgesteuertes Zurückfahren 710 von der Halteposition 3d nach Beendigung des Haltens 640 auf die Zielposition 3e, die erreicht wird, wenn der Schmelzedruck p_{L} einen Zieldruck pₑ erreicht,
- Ermitteln des Druckunterschieds 720 zwischen dem Peakdruck p_{d} und dem Zieldruck pₑ,
- Ermitteln der Strecke 730 zwischen der Halteposition 3d und der Zielposition 3e und
- Berechnung der Federkonstante 740 der flüssigen Phase 12.

Fig. 13 zeigt ein Ablaufdiagramm eines Verfahrens zur Druckvorbereitung 260 der flüssigen Phase 12, wobei das Verfahren 260 folgende Schritte umfasst:
- aktives Dekomprimieren 810 der flüssigen Phase 12 durch Zurückziehen des Kolbens 3 in Abhängigkeit der Federkonstante und
- Öffnen 820 der Düse 8.

## Patentansprüche

1. Verfahren (200) zum Bereitstellen druckfähiger Schmelze (12) zum Betreiben eines Druckkopfes (100) für einen 3D-Drucker, wobei
das Verfahren (200) folgende Schritte umfasst:
- Umwandeln (230) des Materials von einer festen Phase (10) über eine plastische Phase (11) in eine flüssige Phase (12) und
- Verdichten (240) des Materials (10, 11, 12), wobei
das Verdichten (240) des Materials (10, 11, 12), insbesondere der Verdichtungsprozess (240), folgende Schritte umfasst:
- Vorverdichten (610) des Materials (10, 11, 12) durch Vorschub eines Kolbens (3) des Druckkopfes (100),
- Verschließen (620) einer Düse (8) des Druckkopfes (100),
- Verdichten (630) des Materials (10, 11, 12) durch Vorschub des Kolbens (3) und
- Halten (640) des Kolbens (3) in einer Halteposition (3d),
**dadurch gekennzeichnet, dass** das Vorverdichten (610) des Materials (10, 11, 12) durch Vorschub des Kolbens (3) druck- und/oder kraftgesteuert durchgeführt wird, wobei bis zu einer Position (3c) vorverdichtet wird, die erreicht ist, wenn eine materialabhängige Steigung und/oder ein materialabhängiger Steigungswinkel einer Kraft- und/oder Druckkurve erreicht und/oder überschritten wird.

2. Verfahren (200) nach Anspruch 1,
**dadurch gekennzeichnet, dass** das die Düse (8) nach dem Vorverdichten (610) verschlossen wird (620).

3. Verfahren (200) nach einem der Ansprüche 1 oder 2,
**dadurch gekennzeichnet, dass** das Verdichten (630) des Materials (10, 11, 12) durch Vorschub des Kolbens (3) bei verschlossener Düse (8) druckgesteuert durchgeführt wird und dabei eine Halteposition (3d) angefahren wird, bis ein Peakdruck (p_{d}) erreicht wird.

4. Verfahren (200) nach Anspruch 3,
**dadurch gekennzeichnet, dass** der Kolben (3) in der Halteposition (3d) gehalten wird, wobei während des Haltevorgangs (640) ein Druck (p_{L}) und/oder eine Temperatur (T_{L}) der flüssigen Phase (12) gemessen werden und die Messwerte durch eine Auswerteeinheit (114) zur Funktionskontrolle des Verdichtungsprozesses (240) überprüft werden.

5. Verfahren (200) nach einem der vorhergehenden Ansprüche,
**dadurch gekennzeichnet, dass** nach dem Verdichten (240) des Materials (10, 11, 12) eine Druckvorbereitung (260) der flüssigen Phase (12) erfolgt, wobei die Druckvorbereitung (260) folgende Schritte umfasst:
- aktives Dekomprimieren (810) der flüssigen Phase (12) durch Zurückziehen des Kolbens (3) und
- Öffnen (820) der Düse (8).

6. Verfahren (200) nach Anspruch 1,
**dadurch gekennzeichnet, dass** das Umwandeln (230) des Materials von einer festen Phase (10) über eine plastische Phase (11) in eine flüssige Phase (12) zumindest folgenden Schritt umfasst:
- Erhitzen (510) des Materials (10, 11, 12) durch ein oder mehrere Heizelemente (61, 63) eines Düsenkopfes (6).

## Claims

1. Method (200) for providing a printable melt (12) for the operation of a printhead (100) for a 3D printer, wherein
the method (200) comprises the following steps:
- transforming (230) the material from a solid phase (10) to a liquid phase (12) via a plastic phase (11), and
- compacting (240) the material (10, 11, 12), wherein
the compacting (240) of the material (10, 11, 12), in particular the compaction process (240), comprises the following steps:
- pre-compacting (610) the material (10, 11, 12) by advancing a piston (3) of the printhead (100),
- closing (620) a nozzle (8) of the printhead (100),
- compacting (630) the material (10, 11, 12) by advancing the piston (3), and
- holding (640) the piston (3) in a holding position (3d),
**characterized in that** the pre-compacting (610) of the material (10, 11, 12) is carried out in pressure- and/or force-controlled fashion by advancing the piston (3), wherein the pre-compacting is carried out as far as a position (3c) which is achieved when a material-dependent gradient and/or a material-dependent gradient angle of a force curve and/or pressure curve is reached and/or exceeded.

2. Method (200) according to Claim 1,
**characterized in that** the nozzle (8) is closed (620) after the pre-compacting (610).

3. Method (200) according to either of Claims 1 and 2,
**characterized in that** the compacting (630) of the material (10, 11, 12) is carried out in pressure-controlled fashion by advancing the piston (3) with the nozzle (8) closed and in the process the piston is brought closer to a holding position (3d), until a peak pressure (p_{d}) is reached.

4. Method (200) according to Claim 3,
**characterized in that** the piston (3) is held in the holding position (3d), wherein, during the holding operation (640), a pressure (p_{L}) and/or a temperature (T_{L}) of the liquid phase (12) are/is measured and the measured values are checked by an evaluation unit (114) to test the functioning of the compaction process (240).

5. Method (200) according to one of the preceding claims,
**characterized in that**, after the compacting (240) of the material (10, 11, 12), the liquid phase (12) is prepared for printing (260), wherein the preparation for printing (260) comprises the following steps:
- actively decompressing (810) the liquid phase (12) by retracting the piston (3) and
- opening (820) the nozzle (8).

6. Method (200) according to Claim 1,
**characterized in that** the transforming (230) of the material from a solid phase (10) to a liquid phase (12) via a plastic phase (11) comprises at least the following steps:
- heating (510) the material (10, 11, 12) by means of one or more heating elements (61, 63) of a nozzle head (6).

## Revendications

1. Procédé (200) pour fournir une masse fondue imprimable (12) pour faire fonctionner une tête d'impression (100) pour une imprimante 3D,
le procédé (200) comprenant les étapes suivantes :
- la transformation (230) du matériau d'une phase solide (10) en une phase liquide (12) par l'intermédiaire d'une phase plastique (11) et
- le compactage (240) du matériau (10, 11, 12),
le compactage (240) du matériau (10, 11, 12), notamment le processus de compactage (240), comprenant les étapes suivantes :
- le précompactage (610) du matériau (10, 11, 12) par avance d'un piston (3) de la tête d'impression (100),
- la fermeture (620) d'une buse (8) de la tête d'impression (100),
- le compactage (630) du matériau (10, 11, 12) par avance du piston (3) et
- le maintien (640) du piston (3) dans une position de maintien (3d),
**caractérisé en ce que** le précompactage (610) du matériau (10, 11, 12) est effectué par avance du piston (3) commandée par la pression et/ou la force, le précompactage étant effectué jusqu'à une position (3c) qui est atteinte lorsqu'une pente dépendant du matériau et/ou un angle de pente dépendant du matériau d'une courbe de force et/ou de pression est atteint et/ou dépassé.

2. Procédé (200) selon la revendication 1,
**caractérisé en ce que** la buse (8) est fermée (620) après le précompactage (610).

3. Procédé (200) selon l'une des revendications 1 ou 2,
**caractérisé en ce que** le compactage (630) du matériau (10, 11, 12) est effectué par avance du piston (3) de manière commandée par la pression lorsque la buse (8) est fermée, et une position de maintien (3d) est mise en place jusqu'à ce qu'une pression maximale (p_{d}) soit atteinte.

4. Procédé (200) selon la revendication 3,
**caractérisé en ce que** le piston (3) est maintenu dans la position de maintien (3d), une pression (p_{L}) et/ou une température (T_{L}) de la phase liquide (12) étant mesurées pendant le processus de maintien (640) et les valeurs mesurées étant vérifiées par une unité d'évaluation (114) pour contrôler le fonctionnement du processus de compactage (240).

5. Procédé (200) selon l'une quelconque des revendications précédentes,
**caractérisé en ce qu'**après le compactage (240) du matériau (10, 11, 12), une préparation à l'impression (260) de la phase liquide (12) est effectuée, la préparation à l'impression (260) comprenant les étapes suivantes :
- la décompression active (810) de la phase liquide (12) par retrait du piston (3) et
- l'ouverture (820) de la buse (8).

6. Procédé (200) selon la revendication 1,
**caractérisé en ce que** la transformation (230) du matériau d'une phase solide (10) à une phase liquide (12) par l'intermédiaire d'une phase plastique (11) comprend au moins l'étape suivante :
- le chauffage (510) du matériau (10, 11, 12) par un ou plusieurs éléments chauffants (61, 63) d'une tête de buse (6).
